# EUROPEAN PATENT SPECIFICATION

(11) **EP 1 858 235 B1**
(45) Date of publication and mention of the grant of the patent: **20.06.2018**
(21) Application number: 07251936.6
(22) Date of filing: 10.05.2007
(51) Int. Cl.: H04M 1/02

(54) **Foldable electronic device with angle detection for selecting an operating mode**
Klappbares elektronisches Gerät mit Winkelerkennung zum Auswählen eines Betriebsmodus
Appareil électronique pliable avec détection d'angle pour sélectionner un mode de fonctionnement

(30) Priority: 16.05.2006 US 436202
(43) Date of publication of application: 21.11.2007
(60) Divisional application: 18156373.5
(73) Proprietor: Nokia Technologies Oy, 02610 Espoo (FI)
(72) Inventor: Dalby, Anthony, London W5 4ER (GB); Meyer, Axel E., 00850 Helsinki (FI); Sermon, William, Chalfont St. Giles Buckinghamshire HP8 4LW (GB); Shirgaonkar, Sameer, London SW4 9LS (GB); Tompkin, Crispian, Los Angeles California 90025 (US); Wong, Chee, London N1 2XH (GB); Bradford, Simon, 02260 Espoo (FI); Alfthan, Niilo, 33100 Tampere (FI); Aarras, Mikko, 00400 Helsinki (FI); Christensen, Claus Allan, 2300 Copenhagen (DK)
(74) Representative: Potter Clarkson LLP

(56) References cited:
- EP-A- 0 898 223
- EP-A2- 0 898 405
- WO-A-2005/053287
- US-A1- 2003 211 872
- US-A1- 2004 067 770
- US-A1- 2006 034 601
- US-B1- 6 373 006

## Description

### Background to the Invention

The invention relates to the field of electronic devices, in particular handheld electronic device comprising electronic displays. Although such devices may be hand-held in use, they do not have to be hand-held in use.

Electronic devices, particularly user-portable radiotelephones (e.g. mobile cellular phones), can comprise two parts which can be folded upon one another in closed and open configurations of the device. Such arrangements allow for compact design of the electronic devices. Such devices often incorporate displays.

There is a need for larger displays as the size of portable electronic devices incorporating display gets smaller.

EP 0 898 405 A2 describes an information communication terminal device comprising an upper case and a lower case that are rotatably connected in a connection part. A display/operation part is provided almost in the whole upper case and a display/operation part is provided almost in the whole lower case. In the display/operation parts, in addition to camera images of a comprised video camera, a reception image, and various data, touch-type operation buttons are displayed. The display/operation parts have the functions as the operation part as well as the display part. "Recording" mode, "transmission/reception" mode and "information acquisition" mode can be selectively set by a cursor button and the device can be used according to the mode.

US 6 373 006 B1 describes an apparatus for detecting the opening and closing angle which is easy to switch, is reliable, is capable of positively preventing howling from occurring, can be reduced in size and weight, and uses no special components. The apparatus comprises a first and second hinge portion belonging to first and second housings, respectively, for pivotally linking first housing to said second housing.

US 2003/0211872 describes a portable personal communicator that includes a body portion and a flip element having a built in display. The body portion includes either a telephone keypad or a second display. The personal communicator functions as a radiotelephone, and can also transmit and receive non-voice data messages. Input keys on the flip element are provided proximate to the flip element display so that software-definable functions performed by the keys can be indicated on the display adjacent to the respective keys. The display(s) are turned off when the flip element is closed.

US 2005/053287 A1 describes a communication apparatus having a first housing member pivotally coupled to a second housing member, a controller operable in a plurality of operation states and a detector associated with the first and second housing members are connected to the controller. The detector is adapted to detect an angle position related to the first and second housing members and supply an angle position detection signal to the controller. It provides for operation of the described communication apparatus without access to the comprised keyboard being available to the user.

### Brief Summary of the Invention

In a first aspect, the present invention provides a foldable electronic device as described in Claim 1.

The device may be arranged such that the first and second folding configurations may be self-supporting configurations allowing the device to be stably placed on a support surface with the folding axis substantially perpendicular to the support surface.

The device may be arranged such that the folding angle between the first and second parts is substantially in the range 135-180 degrees for the first and second configurations.

The device may be arranged such that the first configuration is provided when the folding angle between the first and second parts is substantially in the range 135-160 degrees.

The device may be arranged such that the second configuration is provided when the folding angle between the first and second parts is substantially in the range 170-180 degrees.

The device may be arranged such that the first configuration is a closed configuration of the device. The device may be arranged such that the second configuration is an open configuration of the device. The device may be arranged such that the first and second configurations are open configurations of the device.

The device may be arranged such that the first display acts as a display in the first configuration.

The device may be a communications device and the first part may comprise one or more speaker elements to transmit audio to a user of the device and the second part may comprise one or more microphone elements to receive audio from a user of the device.

The communications device may be arranged to make and/or receive communication transmissions in the first and second configuration. The communication transmission may be audio and/or video telephony transmissions.

The device may be arranged such that the first and second displays are arranged on respective first and second faces of respective first and second parts, the respective display faces being arrangeable to be opposingly facing one another, and wherein the first and second configurations are configurations in which the faces are arranged to be opposing one another.

The device may be arranged to display an image in the second operating mode, wherein the first display is arranged to display a portion of the image and the second display is arranged to display the remaining portion of the image.

The device may be arranged such that the images on the respective displays in the second configuration are un-related images.

The device may be arranged such that in the second configuration, one of the displays provides a visual user interface to an applications program to allow a user to control the display of images on the other display.

The device may comprise one or more user input elements and the device may be arranged such that in the second configuration, one or more of the user input elements is arranged to provide input to an applications program to allow a user to control the display of images on one or both of the displays.

The device may be arranged such that the first and second displays are arranged to act as user input elements in the second configuration.

One or more user input elements may be provided adjacent the first and/or second displays. One or more user input elements may be provided adjacent the second display to be operable in the second configuration.

The displays may be arranged in proximity to the folding axis such that when the device is in the second configuration, the space between adjacent first and second displays does not substantially distract a user when viewing both adjacent displays at the same time.

The device may comprise one or more camera elements arranged to allow a user to view camera images on one or more of the displays.

The device may be arranged such that in the second configuration, one of the displays can show a previously captured image and the other display can shown an image of a scene to be captured by the device camera. The previously captured image may an image previously captured by the device camera. The previously captured image may an image previously captured by the device camera immediately preceding the scene displayed by the device camera.

A camera device may be attachable to the device. In such a case, the camera device is not integral with the device.

The first and second parts may be foldable about the folding axis to completely overlie one another. The device may be arranged such that the displays always face each other about the folding axis. However, in other embodiments, the device may be arranged such that the displays can be moved away from the facing position.

The first and second parts may be arranged to be foldable only about a single folding axis. The first and second parts may be arranged to be foldable about additional folding axes. The first and second parts may be arranged to be rotatable with respect to one another about a rotation axis.

The device may be arranged to be manually foldable. The device may be arranged to comprise one or more spring mechanism to assist folding of the device into one or more of the configurations.

The device may be arranged to be automatically foldable upon the user actuation of a user operable element. The device may be arranged such that the folding of the device into one or more of the configurations may be motor driven.

The device may have stable first and second configurations, with one or more intermediate configurations being comparatively unstable.

The device may be lockable in a closed configuration.

The device may be arranged to be handheld in the first configuration.

The device may be arranged to continuously monitor the folding configuration to determine the operating mode of the device. The device may be arranged to determine whether the folding angle between the first and second parts has reached a predetermined angle to determine the operating mode of the device.

The displays may be provided on inner faces of the parts. The displays may be provided on outer faces of the parts.

The device may have additional operating modes based on other configurations of the device.

Also described herein is a foldable electronic apparatus comprising first and second parts being arranged to be foldable with respect to each other about a folding axis to define first and second apparatus folding configurations, wherein the first and second parts comprise respective first and second displays, wherein the apparatus is arranged to have respective first and second operating modes according to whether the apparatus is in the first configuration or the second configuration, and wherein, in the first operating mode, the first display is arranged to act as a user input, and in the second operating mode, the first and second displays are arranged to act as displays.

Also described herein is a foldable electronic device comprising first and second parts being arranged to be foldable with respect to each other about a folding axis to define first and second device folding configurations, wherein the first and second parts comprise respective first and second displays, wherein the device is arranged to have respective first and second operating modes according to whether the device is in the first configuration or the second configuration, and wherein, in the first operating mode, the first display is arranged to provide one or more indications to one or more adjacent user inputs, and in the second operating mode, the first and second displays are arranged to act as displays.

The apparatus may be modules of the device described above. One or more of the displays may be means for displaying. One or more of the user input elements may be means for user input.

The invention encompasses one or more aspects, embodiments and/or features of the aspects and/or embodiments in isolation and various combinations whether or not specifically mentioned in isolation or combination. Corresponding means for performing the functions disclosed are within the present disclosure. Associated methods of assembly are also within the present disclosure.

### Brief Description of the Figures

Specific embodiments of the present invention will now be described with reference to the following Figures in which :
Figure 1 is a schematic illustration of an electronic device according to one embodiment of the invention; and
Figure 2 shows plan views of the electronic device of Figure 1 in a first (Figure 2a) and second (Figure 2b) configurations;
Figure 3 is a perspective view of an electronic device according to one embodiment of the invention.

### Detailed Description of Specific Embodiments of the Invention

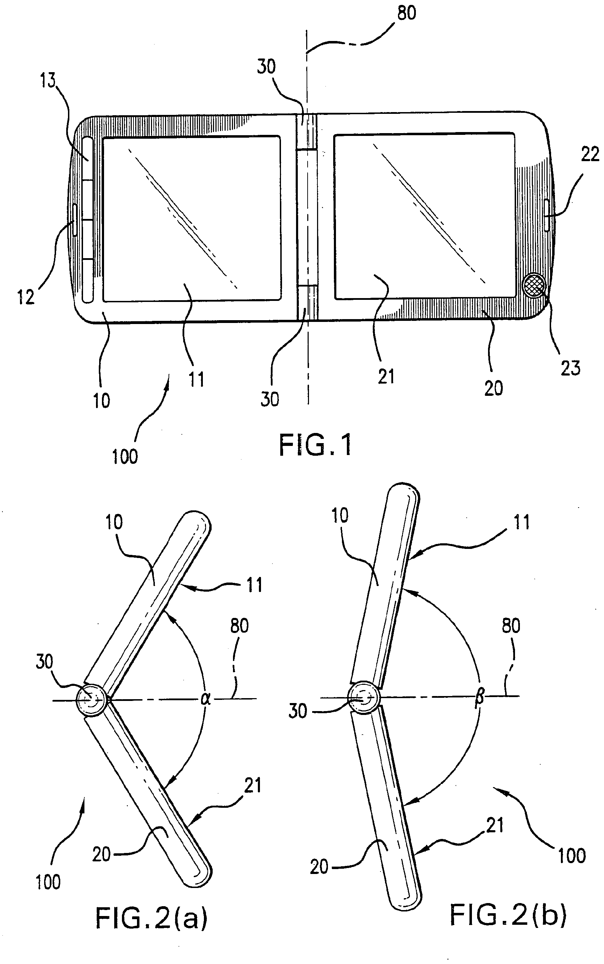

A schematic illustration of an electronic device 100 according to one embodiment of the invention is shown in Figure 1. In this case, the device is a radiotelephone (such as a so called mobile telephone) with additional audio/visual functionality. The additional audio/visual functionality allows the user to use the device to play and/or record audio (e.g. MP3 or other music/audio format) and/or video. In other embodiments, the device 100 may not have radiotelephone functionality.

The device 100 comprises two parts 10, 20 which are foldable about a folding axis 80. Hinge mechanisms 30 are used to allow the parts to be folded into a number of configurations. The parts 10,20 can be folded over one another such that the inner faces of the device touch in a closed configuration. In the closed configuration, the parts 10,20 can be considered to have a zero folding angle between them, whereas in an open configuration, the parts 10, 20 have a non-zero folding angle defined between them. In this case, the device 100 can be opened to a nearly 360 degrees folding angle such that the inner faces of the device 100 in the closed configuration form the outer faces of the device 100 in the fully open configuration.

In this case, the parts 10, 20 are generally rectangular. Other embodiments may have different shaped parts 10, 20. The inner faces of the parts 10, 20 each comprise a respective electronic display 11, 21. Thus, the first part 10 has a first display 11 and the second part 20 has a second display 21. As such, these parts 10, 20 comprise respective first and second means for displaying with said first and second displays.

It will be appreciated that these displays 11, 21 are located on either side of the folding axis 80. In this embodiment, the displays 11, 21 are positioned in close proximity to the folding axis 80. Thus, the gap between the adjacent ends of the displays 11, 21 is quite small in a number of open configurations.

The first part 10 comprises a microphone port 12 and a number of user input elements 13. In this case, the user input elements are keys. The second housing 20 comprises a speaker port 22, and a camera 23. The device 100 is sized so that it is possible to handhold the device when making a telephone call.

The device 100 can be opened into many configurations. Two such configurations are shown in Figure 2 (in plan view). In Figure 2a, the parts 10, 20 are folded to provide a first device configuration, and in Figure 2b, the parts 10, 20 are folded to provide a second device configuration. In the first configuration, the folding angle between the parts is α, and in the second configuration, the folding angle between the parts is β.

The user can answer and/or make a call by opening the foldable device 100 into an open configuration. In some embodiments, the user may also be able to answer and/or make a call in the closed configuration. In one or more general embodiments, the device 100 is folded into an open configuration to allow access to one or more user input elements (e.g. 12, 11, 23) and/or output elements (11. 21, 22) located on one or more of the inner faces of the device 100.

When the device 100 is opened, the first display 11 is arranged to be a user input element (e.g. a touch sensitive screen). Thus, the user can control one or more of the functions of the device 100 by actuating one or more regions on the display 11. In this case, the display 11 provides one or more indications to one or more particular locations which should be actuated (e.g. by depressing) to control one or more of the operations/functions of the device 100.

In one embodiment, the user is given indications to actuate regions of the display 11. In other embodiments, the user may be given indications to actuate one or more user input elements adjacent the first display 11. In this way, for example, input elements 13 can be used as so-called "soft keys", the function performed by them being indicated on an adjacent screen, the function depending on the particular location in the user interface program.

Thus, in the first configuration, the display 11 acts as a user input and/or gives indications to one or more adjacent user input elements 13 i.e. the device 100 operates in a first operating mode. In other embodiments, the adjacent user input elements may be on the other side of the hinge 30 on part 20.

As the device is further opened passed a critical folding angle α_{crit}, which in this case is 160 (+/- 10 degrees), the device 100 is configured to move into a second operating mode. The detection of this critical folding angle can be done by using one or more mechanical/electrical/electromechanical sensors in the device 100.

In the second operating mode, both displays 11, 21 act as displays. In certain embodiments, one or more the displays may also act as user input elements and/or give indications to one or more adjacent user input elements.

In this embodiment, the folding angle β in the second configuration is 170-180 (+/-10 degrees). The second configuration folding angle β is such that the two adjacent displays 11, 21 are substantially in the same plane. The two adjacent displays can be used as a continuous single display. Thus, an image can be partially displayed on the first display 11, and the rest of the image can be displayed on the adjacent second display 21.

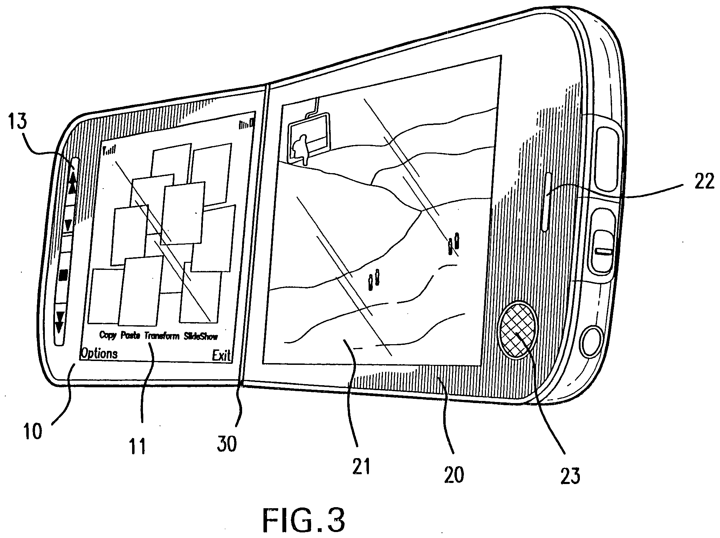

As the underneath of the device 100 is relatively flat, the device 100 can be placed on a support surface to be free-standing (Figure 3). In other embodiments, a stand may be required, and the device 100 may be configured to be attachable to the stand.

In the second configuration, the first display 11 may be useable to provide control over the image which is provided on the second display 21. This may also be true in the first configuration. Figure 3 shows that display 11 is a user interface which allows a user to activate copy, paste, transform, slideshow functions using the display 11. Further options are actuatable (bottom left "options" and bottom right "exit"), and the strength of the battery and the radiosignal strength are also indicated on the display 11. Figure 3 can be for both first and second configurations.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

For example, aspects described in relation to the first display may be on the second display (and vice versa). The first display may not necessarily comprise a microphone port (or microphone functionality). In other embodiments, the radiotelephone functionality may not be linked with the first and configurations of the device. The second display 21 may be turned off or turned on in the first configuration. The device may or may not receive/transmit audio/video transmissions (including broadcast transmissions). The displays may or may not be the same size. The foldable parts may or may not be the same size. Many different mechanisms to detect the folding angle may be provided.

While there have been shown and described and pointed out fundamental novel features of the invention as applied to preferred embodiments thereof, it will be understood that various omissions and substitutions and changes in the form and details of the devices and methods described may be made by those skilled in the art without departing from the scope of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. A foldable electronic apparatus comprising first and second parts (10, 20) being arranged to be foldable with respect to each other about a folding axis (80) to define first and second apparatus folding configurations,
the first and second parts comprising respective first and second displays (11, 21) arranged to switch between respective first and second display operating modes according to whether the apparatus is in the first folding configuration or the second folding configuration according to a critical folding angle defined in a folding configuration of the apparatus, and wherein,
in the first display operating mode, the first display (11) is arranged to allow for user input, and
in the second display operating mode, wherein the first and second displays (11, 21) are substantially in the same plane, the first and second displays (11, 21) are arranged to switch to act together as a continuous single display.

2. The apparatus of Claim 1, wherein the first display (11) is arranged to allow for user input by acting as a user input element.

3. The apparatus of Claim 1, wherein the first display (11) is arranged to allow for user input by providing one or more visual indications to one or more adjacent user input elements.

4. The apparatus of claim 1, wherein the apparatus is arranged such that the first and second folding configurations are self-supporting configurations allowing the apparatus to be stably placed on a support surface with the folding axis (80) substantially perpendicular to the support surface.

5. The apparatus of claim 1, wherein the apparatus is arranged such that the folding angle between the first and second parts (10, 20) is substantially in the range 135-180 degrees for the first and second folding configurations.

6. The apparatus of claim 1, wherein the apparatus is arranged such that the first folding configuration is provided when the folding angle between the first and second parts (10, 20) is substantially in the range 135-160 degrees.

7. The apparatus of claim 1, wherein the apparatus is arranged such that the first and second folding configurations are open configurations of the apparatus.

8. The apparatus of claim 1, wherein the apparatus is arranged such that the first display (11) acts as a display in the first folding configuration.

9. The apparatus of claim 1, wherein the apparatus is a communications apparatus and the first part (10) comprises one or more speaker elements (22) to transmit audio to a user of the apparatus and the second part (20) comprises one or more microphone elements (12) to receive audio from a user of the apparatus.

10. The apparatus of claim 9, wherein the apparatus is arranged to make and/or receive communication transmissions in the first and second folding configuration.

11. The apparatus of claim 1, wherein the apparatus is arranged such that the first and second displays (11, 21) are arranged on respective first and second faces of respective first and second parts (10, 20), the respective display faces being arrangeable to be opposingly facing one another, and wherein the first folding configuration is a configuration in which the faces are arranged to be opposing one another.

12. The apparatus of claim 1, wherein the apparatus is arranged to display an image in the second operating mode, wherein the first display (11) is arranged to display a portion of the image and the second display (21) is arranged to display the remaining portion of the image.

13. The apparatus of claim 1, wherein the apparatus is arranged such that the images on the respective displays in the second folding configuration are un-related images.

14. The apparatus of claim 1, wherein the apparatus is arranged such that in the second folding configuration, one of the displays (11/21) provides a visual user interface to an applications program to allow a user to control the display of images on the other display (11/21).

15. The apparatus of claim 1, wherein the apparatus comprises one or more user input elements (13) and wherein the apparatus is arranged such that in the second folding configuration, one or more of the user input elements (13) is arranged to provide input to an applications program to allow a user to control the display of images on one or both of the displays (11, 21).

16. The apparatus of claim 1, wherein the apparatus is arranged such that the first and second displays (11, 21) are arranged to act as user input elements in the second folding configuration.

17. The apparatus of claim 1, wherein one or more user input elements (13) are provided adjacent the first and/or second displays (11, 21).

18. The apparatus of claim 1, wherein one or more user input elements (13) are provided adjacent the second display (21) to be operable in the second folding configuration.

19. The apparatus of claim 1, wherein the displays (11, 21) are arranged in proximity to the folding axis such that when the apparatus is in the second folding configuration, the space between adjacent first and second displays (11, 21) does not substantially distract a user when viewing both adjacent displays at the same time.

20. The apparatus of claim 1, wherein the apparatus comprises one or more camera elements arranged to allow a user to view camera images on one or more of the displays.

21. The apparatus of claim 1, wherein the apparatus is arranged such that in the second folding configuration, one of the displays (11/21) is able to show a previously captured image and the other display (11/21) is able to provide an image of a scene to be captured by the apparatus camera (23).

22. The apparatus of claim 1, wherein the apparatus is arranged to provide first and second parts (10, 20) which are foldable about the folding axis (80) to completely overlie one another.

23. The apparatus of claim 1, wherein the apparatus is arranged such that the displays (11, 21) always face each other about the folding axis (80).

24. The apparatus of claim 1, wherein the first and second parts (10, 20) are arranged to be rotatable with respect to one another about a rotation axis.

25. The apparatus of claim 1, wherein the apparatus has stable first and second folding configurations, with one or more intermediate apparatus folding configurations, different from the stable first and second folding configurations, being comparatively unstable.

26. The apparatus of claim 1, wherein the apparatus is arranged to be handheld in the first folding configuration.

27. The apparatus of claim 1, wherein the apparatus is arranged to determine whether the folding angle between the first and second parts (10, 20) has reached a predetermined angle to determine the operating mode of the apparatus.

28. The apparatus of claim 1, wherein the apparatus is an electronic device (100).

29. A method of assembling a foldable electronic apparatus, the apparatus comprising first and second parts (10, 20) being arranged to be foldable with respect to each other about a folding axis (80) to define first and second apparatus folding configurations, the first and second parts (10, 20) comprising respective first and second displays (11, 21) arranged to switch between respective first and second display operating modes according to whether the apparatus is in the first folding configuration or the second folding configuration according to a critical folding angle defined in a folding configuration of the apparatus, and wherein, in the first display operating mode, the first display (11) is arranged to allow for user input, and in the second display operating mode, wherein the first and second displays are substantially in the same plane, the first and second displays (11, 21) are arranged to switch to act together as a continuous single display,
the method comprising assembling the first and second parts (10, 20) with respective first and second displays (11, 21) such that the parts are foldable about the folding axis (80) such that the assembled apparatus is configured to provide the first and second folding configurations.

## Patentansprüche

1. Klappbares elektronisches Gerät, aufweisend einen ersten und einen zweiten Teil (10, 20), die so eingerichtet sind, dass sie um eine Klappachse (80) klappbar sind, um eine erste und eine zweite Klappkonfiguration des Geräts zu definieren,
wobei der erste und der zweite Teil eine jeweilige erste und zweite Anzeige (11, 21) aufweisen, die dazu eingerichtet sind, um zwischen einem jeweiligen ersten und zweiten Anzeigebetriebsmodus umzuschalten, je nachdem, ob sich das Gerät in der ersten Klappkonfiguration oder in der zweiten Klappkonfiguration befindet, gemäß einem definierten kritischen Klappwinkel, der in einer Klappkonfiguration des Geräts definiert ist, und wobei
in dem ersten Anzeigebetriebsmodus die erste Anzeige (11) eingerichtet ist, um eine Benutzereingabe zu ermöglichen, und
in dem zweiten Anzeigebetriebsmodus die erste und die zweite Anzeige (11, 21) sich im Wesentlichen in der gleichen Ebene befinden, wobei die erste und die zweite Anzeige (11, 21) eingerichtet sind, um zusammen als eine durchgehende einzelne Anzeige zu fungieren.

2. Gerät nach Anspruch 1, wobei die erste Anzeige (11) eingerichtet ist, um eine Benutzereingabe zu ermöglichen, indem sie als ein Benutzereingabeelement fungiert.

3. Gerät nach Anspruch 1, wobei die erste Anzeige (11) eingerichtet ist, um eine Benutzereingabe zu ermöglichen, indem eine oder mehrere visuelle Anzeigen an eines oder mehrere benachbarte Benutzereingabeelemente geliefert werden.

4. Gerät nach Anspruch 1, wobei das Gerät so eingerichtet ist, dass die erste und die zweite Klappkonfiguration selbsttragende Konfigurationen sind, die ermöglichen, dass das Gerät stabil auf einer tragenden Fläche, mit der Klappachse (80) im Wesentlichen senkrecht zur tragenden Fläche, platziert ist.

5. Gerät nach Anspruch 1, wobei das Gerät so eingerichtet ist, dass der Klappwinkel zwischen dem ersten und dem zweiten Teil (10, 20) für die erste und die zweite Klappkonfiguration im Wesentlichen in dem Bereich von 135 bis 180 Grad liegt.

6. Gerät nach Anspruch 1, wobei das Gerät so eingerichtet ist, dass die erste Klappkonfiguration vorgesehen ist, wenn der Klappwinkel zwischen dem ersten und dem zweiten Teil (10, 20) im Wesentlichen im Bereich von 135 bis 160 Grad liegt.

7. Gerät nach Anspruch 1, wobei das Gerät so eingerichtet ist, dass die erste und zweite Klappkonfiguration offene Konfigurationen des Geräts sind.

8. Gerät nach Anspruch 1, wobei das Gerät so eingerichtet ist, dass die erste Anzeige (11) als eine Anzeige in der ersten Klappkonfiguration fungiert.

9. Gerät nach Anspruch 1, wobei das Gerät ein Kommunikationsgerät ist und der erste Teil (10) eines oder mehrere Lautsprecherelemente (22) aufweist, um Audio an einen Benutzer des Geräts zu übertragen, und der zweite Teil (20) eines oder mehrere Mikrofonelemente (12) aufweist, um Audio von einem Benutzer des Geräts zu empfangen.

10. Gerät nach Anspruch 9, wobei das Gerät eingerichtet ist, in der ersten und der zweiten Klappkonfiguration Kommunikationsübertragungen herzustellen und/oder zu empfangen.

11. Gerät nach Anspruch 1, wobei das Gerät so eingerichtet ist, dass die erste und die zweite Anzeige (11, 21) auf einer jeweiligen erste und zweite Fläche des jeweiligen ersten und zweiten Teils (10, 20) angeordnet sind, wobei die jeweiligen Anzeigeflächen so angeordnet werden können, dass sie einander gegenüberliegen, und wobei die erste Klappkonfiguration eine Konfiguration ist, in der die Flächen so angeordnet sind, dass sie einander gegenüberliegen.

12. Gerät nach Anspruch 1, wobei das Gerät eingerichtet ist, um in dem zweiten Betriebsmodus ein Bild anzuzeigen, wobei die erste Anzeige (11) eingerichtet ist, um einen Teil des Bildes anzuzeigen, und die zweite Anzeige (21) eingerichtet ist, um den verbleibenden Teil des Bildes anzuzeigen.

13. Gerät nach Anspruch 1, wobei das Gerät so eingerichtet ist, dass die Bilder auf den jeweiligen Anzeigen in der zweiten Klappkonfiguration nicht zusammengehörige Bilder sind.

14. Gerät nach Anspruch 1, wobei das Gerät so eingerichtet ist, dass in der zweiten Klappkonfiguration eine der Anzeigen (11/21) eine visuelle Benutzerschnittstelle zu einem Anwendungsprogramm vorsieht, um einem Benutzer zu ermöglichen, die Anzeige von Bildern auf der anderen Anzeige (11/21) zu steuern.

15. Gerät nach Anspruch 1, wobei das Gerät eines oder mehrere Benutzereingabeelemente (13) aufweist und wobei das Gerät so eingerichtet ist, dass in der zweiten Klappkonfiguration eines oder mehrere der Benutzereingabeelemente (13) dazu eingerichtet sind, eine Eingabe zu einem Anwendungsprogramm bereitzustellen, um einem Benutzer zu ermöglichen, die Anzeige von Bildern auf einer oder beiden der Anzeigen (11, 21) zu steuern.

16. Gerät nach Anspruch 1, wobei das Gerät so eingerichtet ist, dass die erste und die zweite Anzeige (11, 21) dazu eingerichtet sind, um in der zweiten Klappkonfiguration als Benutzereingabeelemente zu fungieren.

17. Gerät nach Anspruch 1, wobei benachbart zu der ersten und/oder der zweiten Anzeige (11, 21) eines oder mehrere Benutzereingabeelemente (13) vorgesehen sind.

18. Gerät nach Anspruch 1, wobei benachbart zu der zweiten Anzeige (21) eines oder mehrere Benutzereingabeelemente (13) vorgesehen sind, um in der zweiten Klappkonfiguration betreibbar zu sein.

19. Gerät nach Anspruch 1, wobei die Anzeigen (11, 21) in der Nähe der Klappachse angeordnet sind, so dass, wenn sich das Gerät in der zweiten Klappkonfiguration befindet, der Raum zwischen der ersten und zweiten Anzeige (11, 21), die benachbart sind, einen Benutzer nicht wesentlich ablenken, wenn er beide nebeneinanderliegende Anzeigen gleichzeitig betrachtet.

20. Gerät nach Anspruch 1, wobei das Gerät eines oder mehrere Kameraelemente aufweist, die so eingerichtet sind, dass ein Benutzer Kamerabilder auf einer oder mehreren der Anzeigen sehen kann.

21. Gerät nach Anspruch 1, wobei das Gerät so eingerichtet ist, dass in der zweiten Klappkonfiguration eine der Anzeigen (11/21) ein zuvor aufgenommenes Bild anzeigen kann, und die andere Anzeige (11/21) dazu in der Lage ist, ein Bild einer Szene, die von der Gerätekamera (23) aufgenommen werden soll, bereitzustellen.

22. Gerät nach Anspruch 1, wobei das Gerät eingerichtet ist, um einen ersten und einen zweiten Teil (10, 20) vorzusehen, die um die Klappachse (80) herum klappbar sind, um vollständig übereinander zu liegen.

23. Gerät nach Anspruch 1, wobei das Gerät so eingerichtet ist, dass die Anzeigen (11, 21) sich um die Klappachse (80) herum immer einander gegenüberstehen.

24. Gerät nach Anspruch 1, wobei der erste und der zweite Teil (10, 20) so eingerichtet sind, dass sie um eine Drehachse herum zueinander drehbar sind.

25. Gerät nach Anspruch 1, wobei das Gerät eine stabile erste und zweite Klappkonfiguration aufweist, wobei eine oder mehrere dazwischenliegende Klappkonfigurationen des Geräts, die sich von der stabilen ersten und zweiten Klappkonfiguration unterscheiden, vergleichsweise instabil sind.

26. Gerät nach Anspruch 1, wobei das Gerät eingerichtet ist, um in der ersten Klappkonfiguration handgehalten zu sein.

27. Gerät nach Anspruch 1, wobei das Gerät eingerichtet ist, um zu bestimmen, ob der Klappwinkel zwischen dem ersten und dem zweiten Teil (10, 20) einen vorbestimmten Winkel erreicht hat, um den Betriebsmodus des Geräts zu bestimmen.

28. Gerät nach Anspruch 1, wobei das Gerät ein elektronisches Gerät (100) ist.

29. Verfahren zur Montage eines klappbaren elektronischen Geräts, wobei das Gerät einen ersten und einen zweiten Teil (10, 20) aufweist, die so eingerichtet sind, dass sie um eine Klappachse (80) klappbar sind, um eine erste und eine zweite Klappkonfiguration des Geräts zu definieren, wobei der erste und der zweite Teil (10, 20) eine jeweilige erste und zweite Anzeige (11, 21) aufweisen, die so eingerichtet sind, dass sie zwischen einem jeweiligen ersten und zweiten Anzeigebetriebsmodus wechseln, je nachdem, ob sich das Gerät in der ersten Klappkonfiguration oder in der zweiten Klappkonfiguration befindet, gemäß einem kritischen Klappwinkel, der in einer Klappkonfiguration des Geräts definiert ist, und wobei in dem ersten Anzeigebetriebsmodus die erste Anzeige (11) eingerichtet ist, um eine Benutzereingabe zu ermöglichen, und in dem zweiten Anzeigebetriebsmodus die erste und die zweite Anzeige im Wesentlichen in der gleichen Ebene liegen, wobei die erste und die zweite Anzeige (11, 21) eingerichtet sind, umzuschalten, um zusammen als eine durchgehende einzelne Anzeige zu fungieren,
das Verfahren aufweisend Montieren des ersten und des zweiten Teils (10, 20) mit entsprechenden ersten und zweiten Anzeigen (11, 21), so dass die Teile um die Klappachse (80) klappbar sind, so dass das montierte Gerät konfiguriert ist, um die erste und die zweite Klappkonfiguration vorzusehen.

## Revendications

1. Appareil électronique pliable comprenant des première et seconde parties (10, 20) qui sont conçues pour pouvoir être pliées l'une par rapport à l'autre autour d'un axe de pliage (80) pour définir des première et seconde configurations de pliage d'appareil,
les première et seconde parties comprenant des premier et second dispositifs d'affichage (11, 21) respectifs conçus pour commuter entre des premier et second modes de fonctionnement de dispositif d'affichage respectifs selon que l'appareil se trouve dans la première configuration de pliage ou dans la seconde configuration de pliage selon un angle de pliage critique défini dans une configuration de pliage de l'appareil et dans lequel,
dans le premier mode de fonctionnement de dispositif d'affichage, le premier dispositif d'affichage (11) est conçu pour permettre une entrée d'utilisateur et
dans le second mode de fonctionnement de dispositif d'affichage, dans lequel les premier et second dispositifs d'affichage (11, 21) sont sensiblement dans le même plan, les premier et second dispositifs d'affichage (11, 21) sont conçus pour commuter pour faire ensemble office de seul dispositif d'affichage continu.

2. Appareil selon la revendication 1, dans lequel le premier dispositif d'affichage (11) est conçu pour permettre une entrée d'utilisateur en faisant office d'élément d'entrée d'utilisateur.

3. Appareil selon la revendication 1, dans lequel le premier dispositif d'affichage (11) est conçu pour permettre une entrée d'utilisateur en fournissant une ou plusieurs indications visuelles à un ou plusieurs éléments d'entrée d'utilisateur adjacents.

4. Appareil selon la revendication 1, dans lequel l'appareil est conçu de telle sorte que les première et seconde configurations de pliage soient des configurations autoportantes permettant à l'appareil d'être placé de manière stable sur une surface de support, l'axe de pliage (80) étant sensiblement perpendiculaire à la surface de support.

5. Appareil selon la revendication 1, dans lequel l'appareil est conçu de telle sorte que l'angle de pliage entre les première et seconde parties (10, 20) soit sensiblement dans la plage comprise entre 135 et 180 degrés pour les première et seconde configurations de pliage.

6. Appareil selon la revendication 1, dans lequel l'appareil est conçu de telle sorte que la première configuration de pliage soit fournie lorsque l'angle de pliage entre les première et seconde parties (10, 20) est sensiblement dans la plage comprise entre 135 et 160 degrés.

7. Appareil selon la revendication 1, dans lequel l'appareil est conçu de telle sorte que les première et seconde configurations de pliage soient des configurations ouvertes de l'appareil.

8. Appareil selon la revendication 1, dans lequel l'appareil est conçu de telle sorte que le premier dispositif d'affichage (11) fait office de dispositif d'affichage dans la première configuration de pliage.

9. Appareil selon la revendication 1, dans lequel l'appareil est un appareil de communication et la première partie (10) comprend un ou plusieurs éléments de haut-parleur (22) pour transmettre un signal audio à un utilisateur de l'appareil et la seconde partie (20) comprend un ou plusieurs éléments de microphone (12) pour recevoir le signal audio d'un utilisateur de l'appareil.

10. Appareil selon la revendication 9, dans lequel l'appareil est conçu pour établir et/ou recevoir des transmissions de communication dans la première et dans la seconde configuration de pliage.

11. Appareil selon la revendication 1, dans lequel l'appareil est conçu de telle sorte que les premier et second dispositifs d'affichage (11, 21) soient disposés sur des première et seconde faces respectives de première et seconde parties respectives (10, 20), les faces d'affichage respectives pouvant être disposées de sorte à se faire face de manière opposée et dans lequel la première configuration de pliage est une configuration dans laquelle les faces sont disposées de sorte à être opposées l'une à l'autre.

12. Appareil selon la revendication 1, dans lequel l'appareil est conçu pour afficher une image dans le second mode de fonctionnement, dans lequel le premier dispositif d'affichage (11) est conçu pour afficher une partie de l'image et le second dispositif d'affichage (21) est conçu pour afficher la partie restante de l'image.

13. Appareil selon la revendication 1, dans lequel l'appareil est conçu de telle sorte que les images sur les dispositifs d'affichage respectifs dans la seconde configuration de pliage soient des images sans rapport les unes avec les autres.

14. Appareil selon la revendication 1, dans lequel l'appareil est conçu de telle sorte que, dans la seconde configuration de pliage, l'un des dispositifs d'affichage (11/21) fournit une interface utilisateur visuelle à un programme d'application pour permettre à un utilisateur de commander l'affichage d'images sur l'autre dispositif d'affichage (11/21).

15. Appareil selon la revendication 1, dans lequel l'appareil comprend un ou plusieurs éléments d'entrée d'utilisateur (13) et dans lequel l'appareil est conçu de telle sorte que, dans la seconde configuration de pliage, un ou plusieurs des éléments d'entrée d'utilisateur (13) soient conçus pour fournir une entrée à un programme d'application pour permettre à un utilisateur de commander l'affichage d'images sur l'un ou sur l'un et l'autre des dispositifs d'affichage (11, 21) .

16. Appareil selon la revendication 1, dans lequel l'appareil est conçu de telle sorte que les premier et second dispositifs d'affichage (11, 21) soient conçus pour faire office d'éléments d'entrée d'utilisateur dans la seconde configuration de pliage.

17. Appareil selon la revendication 1, dans lequel un ou plusieurs éléments d'entrée d'utilisateur (13) sont disposés de sorte à être adjacents au premier et/ou au second dispositif d'affichage (11, 21).

18. Appareil selon la revendication 1, dans lequel un ou plusieurs éléments d'entrée d'utilisateur (13) sont disposés de sorte à être adjacents au second dispositif d'affichage (21) pour être utilisables dans la seconde configuration de pliage.

19. Appareil selon la revendication 1, dans lequel les dispositifs d'affichage (11, 21) sont disposés à proximité de l'axe de pliage de telle sorte que, lorsque l'appareil se trouve dans la seconde configuration de pliage, l'espace entre les premier et second dispositifs d'affichage (11, 21) adjacents ne distraie sensiblement pas un utilisateur lorsqu'il regarde les deux dispositifs d'affichage adjacents en même temps.

20. Appareil selon la revendication 1, dans lequel l'appareil comprend un ou plusieurs éléments d'appareil de prise de vues conçus pour permettre à un utilisateur de regarder des images d'appareil de prise de vues sur un ou plusieurs des dispositifs d'affichage.

21. Appareil selon la revendication 1, dans lequel l'appareil est conçu de telle sorte que, dans la seconde configuration de pliage, l'un des dispositifs d'affichage (11/21) soit capable de montrer une image capturée auparavant et que l'autre dispositif d'affichage (11/21) soit capable de fournir une image d'une scène qui doit être capturée par l'élément de prise de vues (23) de l'appareil.

22. Appareil selon la revendication 1, dans lequel l'appareil est conçu pour fournir des première et seconde parties (10, 20) qui peuvent être pliées autour de l'axe de pliage (80) pour se chevaucher complètement l'une l'autre.

23. Appareil selon la revendication 1, dans lequel l'appareil est conçu de telle sorte que les dispositifs d'affichage (11, 21) soient toujours orientés l'un vers l'autre autour de l'axe de pliage (80).

24. Appareil selon la revendication 1, dans lequel les première et seconde parties (10, 20) sont conçues pour pouvoir être tournées l'une par rapport à l'autre autour d'un axe de rotation.

25. Appareil selon la revendication 1, dans lequel l'appareil présente des première et seconde configurations de pliage stables, avec une ou plusieurs configurations de pliage d'appareil intermédiaires, différentes des première et seconde configurations de pliage stables, qui sont comparativement instables.

26. Appareil selon la revendication 1, dans lequel l'appareil est conçu pour être portatif dans la première configuration de pliage.

27. Appareil selon la revendication 1, dans lequel l'appareil est conçu pour déterminer si l'angle de pliage entre les première et seconde parties (10, 20) a atteint un angle prédéterminé pour déterminer le mode de fonctionnement de l'appareil.

28. Appareil selon la revendication 1, dans lequel l'appareil est un dispositif électronique (100).

29. Procédé d'assemblage d'un appareil électronique pliable, l'appareil comprenant des première et seconde parties (10, 20) qui sont conçues pour pouvoir être pliées l'une par rapport à l'autre autour d'un axe de pliage (80) pour définir des première et seconde configurations de pliage d'appareil, les première et seconde parties (10, 20) comprenant des premier et second dispositifs d'affichage (11, 21) respectifs conçus pour commuter entre des premier et second modes de fonctionnement de dispositif d'affichage respectifs selon que l'appareil se trouve dans la première configuration de pliage ou dans la seconde configuration de pliage selon un angle de pliage critique défini dans une configuration de pliage de l'appareil et dans lequel, dans le premier mode de fonctionnement de dispositif d'affichage, le premier dispositif d'affichage (11) est conçu pour permettre une entrée d'utilisateur et, dans le second mode de fonctionnement de dispositif d'affichage, dans lequel les premier et second dispositifs d'affichage sont sensiblement dans le même plan, les premier et second dispositifs d'affichage (11, 21) sont conçus pour commuter pour faire ensemble office de seul dispositif d'affichage continu,
le procédé consistant à assembler les première et seconde parties (10, 20) avec des premier et second dispositifs d'affichage (11, 21) respectifs de telle sorte que les parties puissent être pliées autour de l'axe de pliage (80) de telle sorte que l'appareil assemblé soit configuré pour fournir les première et seconde configurations de pliage.
